# EUROPEAN PATENT SPECIFICATION

(11) **EP 0 863 305 B1**
(45) Date of publication and mention of the grant of the patent: **03.07.2002**
(21) Application number: 98200630.6
(22) Date of filing: 27.02.1998
(51) Int. Cl.: F02M 37/10, F02M 37/22

(54) **Engine fuel feed system, particularly for motor vehicles**
Brennstoffversorgungssystem für Brennkraftmaschine insbesondere für Kraftfahrzeuge
Système d'alimentation en carburant notamment de véhicule automobile

(30) Priority: 03.03.1997 IT MI970462
(43) Date of publication of application: 09.09.1998
(73) Proprietor: BITRON S.p.A., 10042 Nichelino (Torino) (IT)
(72) Inventor: Burnengo, Paolo, 17020 Orco Feglino (Savona) (IT); Grauso, Antonio, 17013 Albisola Superiore (Savona) (IT)
(74) Representative: De Gregori, Antonella

(56) References cited:
- EP-A- 0 702 142
- US-A- 5 078 167
- US-A- 5 392 750
- US-A- 5 511 957
- US-A- 5 605 133
- PATENT ABSTRACTS OF JAPAN vol. 096, no. 012, 26 December 1996 & JP 08 210212 A (NIPPONDENSO CO LTD), 20 August 1996,

## Description

This invention relates to an engine fuel feed system, particularly for motor vehicles.

Engine fuel feed units with a return line are used in carburation systems in order to obtain a fuel flow at the carburettor which well exceeds the rate consumed, to prevent the engine, in the case of sudden flow requirement variations (such as during violent vehicle acceleration), assuming a condition of fuel deficiency with consequent engine malfunction and intrinsic danger. They are also used in fuel injection systems with the aid of a branched pressure regulator normally mounted in the injector offtake line or in its immediate vicinity, because to ensure fuel injection at a constant pressure difference compared with the engine intake manifold one side of the membrane has to be pneumatically connected to the intake manifold by a tube. Moreover the recycling of fuel to the tank helps to maintain a low fuel temperature within the injector offtake line and limit the possibility of vapour formation within the line. In this respect, vapour formation creates hot restart problems for the engine, particularly under certain conditions.

An engine fuel feed unit as described in the preamble of claim 1 is disclosed in US-A-5,511,957

However, a negative aspect of this system is an increase in fuel temperature within the tank and hence greater vapour formation inside the tank, making the dimensioning of the filter canister and pollutant emission control more critical.

Installing the pressure regulator just ahead of the injector offtake line partly reduces heating of the fuel in the tank, but does not offer other substantial benefits. The alternative of electronically controlling pump operation has a cost/advantage ratio which in the current state of the art is not yet favourable.

Returnless feed systems do not however have a pressure regulator installed in the injector offtake line or in proximity to the engine, and only that fuel throughput strictly necessary for engine operation flows through the injector offtake line. This results in a higher operating temperature of the injector offtake line (and consequently of the fuel contained in it), hence to limit the problems due to this condition the tendency is to operate the fuel feed circuit at a pressure higher than usual, to increase the temperature at which vapour forms in the system.

Returnless systems of this type have their pressure regulator installed within the tank, to recirculate directly into the tank interior the excess throughput provided by the pump.

This different installation position for the pressure regulator no longer enables the vacuum within the engine intake manifold to be used as the reference pressure for fuel feed to the injectors at a constant pressure difference relative to the manifold. This limit is however overcome by a different method of control by the electronic controller, which controls the times for which the injectors open under the various engine operating conditions.

To achieve pressure regulation independent of the extent of clogging of the fuel filter, the pressure regulator is hydraulically connected to the downstream side of the filter, with the drawback that the filter always operates at maximum pump throughput and must therefore be dimensioned in consequence even though, in effect, a large part of this filtered fuel is immediately afterwards returned to the tank to be remixed with unfiltered fuel. Hence the same portion of liquid passes through the filter several times, so increasing its possible clogging.

This large continuous liquid flow passing through the filter means that the filter casing can accumulate electrostatic charges which, if not suitably discharged to earth, could potentially be the cause of danger, given the environment in which it is installed.

In this case the amount of energy which is introduced into the tank is small, and the fuel temperature in the tank does not exceed ambient temperature in practice. Moreover, harmful vapour emission is reduced by about 60% over systems with a return line.

An object of this invention is to provide an engine fuel feed system, particularly for motor vehicles, which obviates the aforesaid drawbacks by virtue of an integrated structure which is more versatile and less bulky for equal performance and equal operating variables.

A further object of the invention is to provide an engine fuel feed system in which the probability of fault or malfunction of the various components is substantially reduced compared with the known art.

A further object of the invention is to provide an engine fuel feed system in which the facility for electrostatic charge accumulation on the filter casing is reduced compared with known systems because of the effect of the particular type of hydraulic circuit formed.

A further object of the invention is to provide an engine fuel feed system which can be integrated, within a narrow space, with a fuel level indicator, for example of tubular type, with advantages in terms of ease of transport of the structure, ease of inserting the fuel intake unit into the tank, and accuracy in calibration.

A further object of the invention is to provide an engine fuel feed system using simple and low-cost traditional components and tested technology.

These and further objects are attained by an engine fuel feed system, in particular for motor vehicles, in accordance with claim 1, to which reference should be made for brevity.

It is proposed to use an engine fuel feed system of the returnless type, comprising a pump associated with the fuel tank, a filter and a pressure regulator, in which the fuel delivered by the pump is fed, in parallel, to a fuel inlet line to the regulator and to a fuel inlet line to the filter.

The fuel leaving the filter is used to feed the vehicle engine.

The regulator uses as reference pressure the pressure required at the delivery and present at the filter exit, before the fuel reaches the device for its distribution to the engine.

In contrast to traditional techniques, the pressure in the tank interior is not used as reference pressure, even though this latter influences the regulation.

Moreover the filter can be constructed of considerably lesser dimensions than the known art, because according to the invention it is traversed only by that fuel quantity fed to the engine and not by the total quantity delivered by the pump (as happens instead in traditional systems).

Further advantages and characteristics of this invention will be more apparent from the ensuing description given by way of non-limiting example with reference to the accompanying drawings, on which:

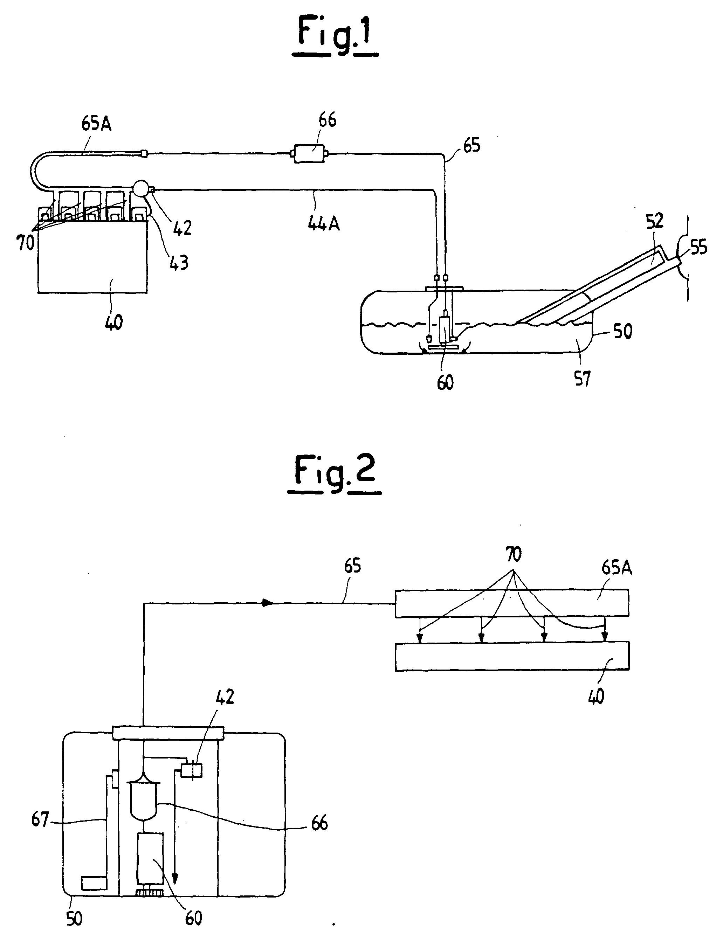

Figure 1 is a schematic view of a traditional engine fuel feed system of the type comprising a return line;
Figure 2 is a schematic view of a traditional engine fuel feed system of the mechanically controlled returnless type;

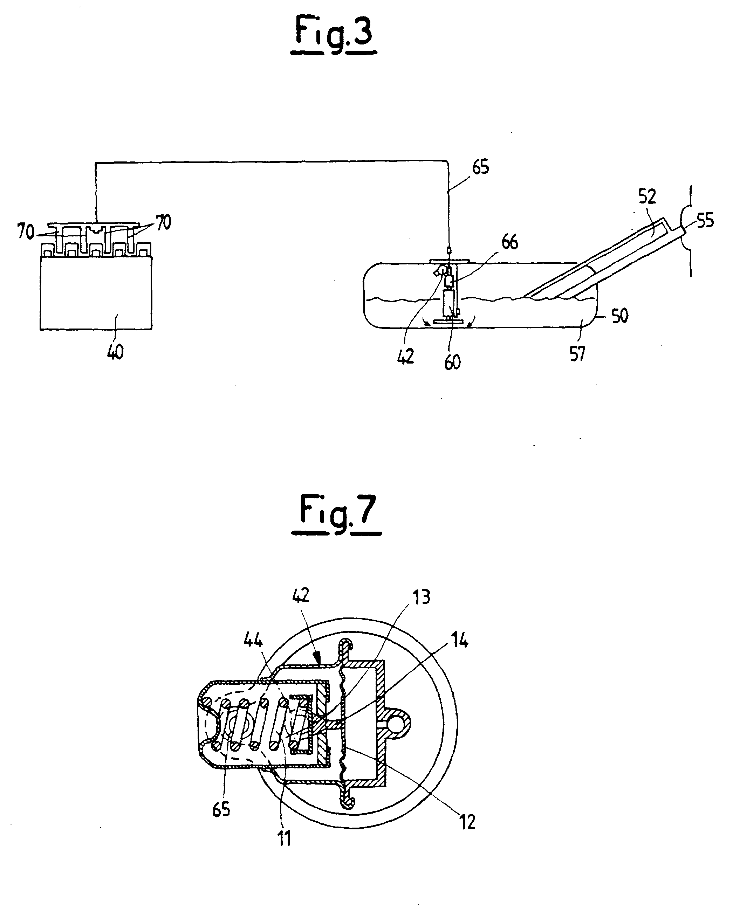

Figure 3 is a schematic view of a traditional engine fuel feed system of the returnless type, with a dedicated pressure regulator;

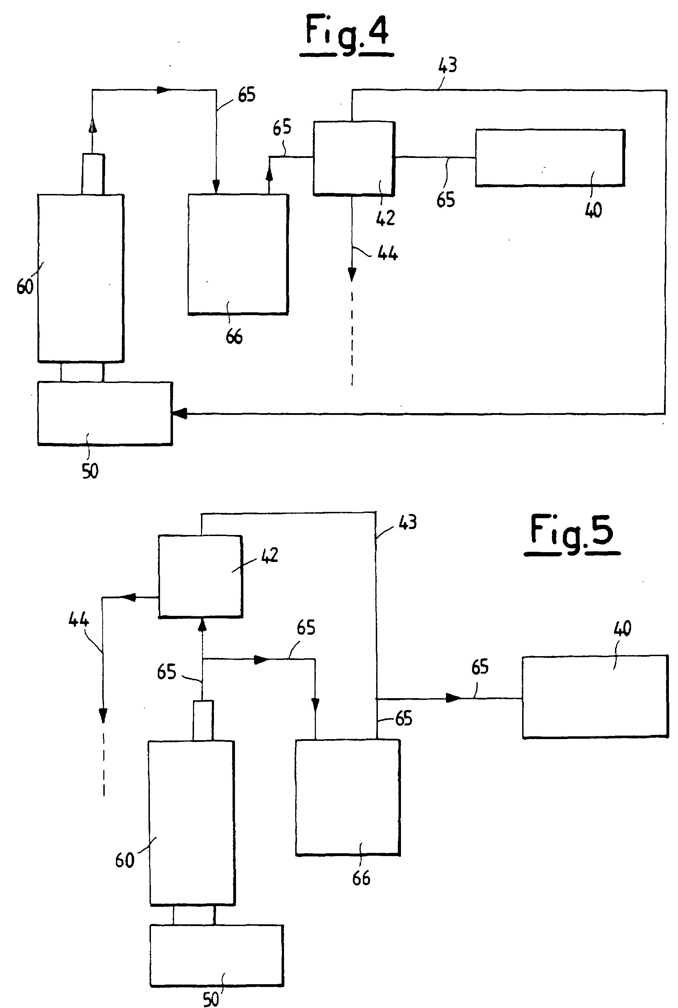

Figure 4 is a general block diagram of a traditional returnless feed system;

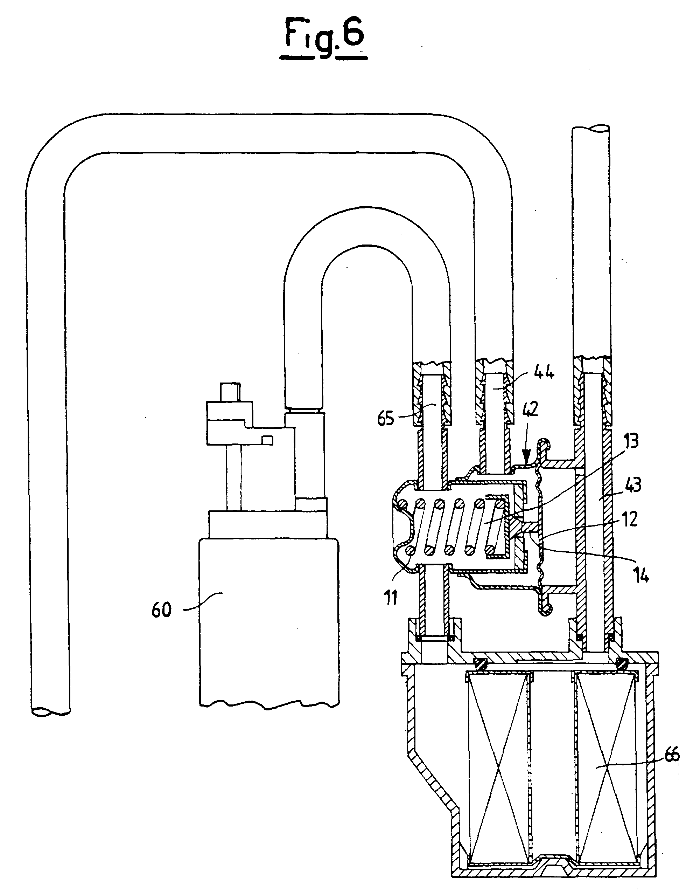

Figure 5 is a general block diagram of an engine fuel feed system, in particular for motor vehicles, of this invention;
Figure 6 is a partly sectional partial view of one embodiment of the engine fuel feed system of the invention;

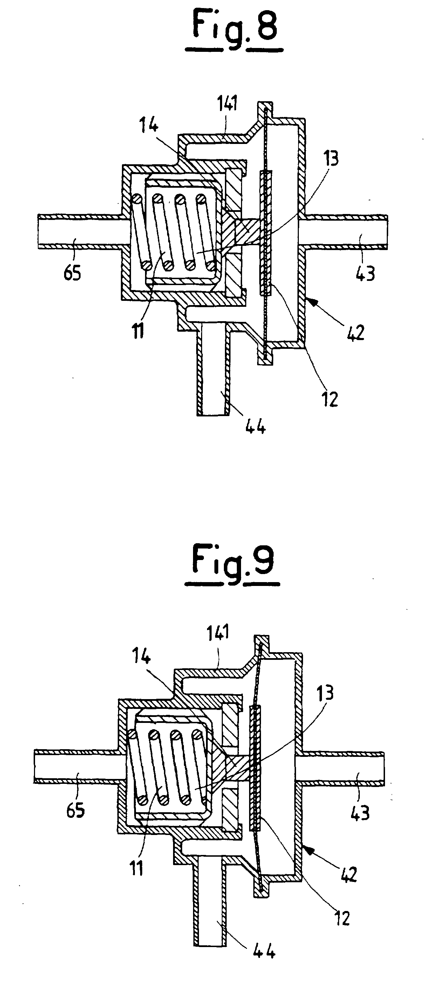

Figure 7 is a section through a first embodiment of a pressure regulator mounted in the feed system of the invention;
Figure 8 is a sectional side view of a second embodiment of a pressure regulator mounted in the feed system of the invention, for the case in which the pressure of the fuel fed to the engine is less than a predetermined reference pressure;
Figure 9 is a sectional side view of the pressure regulator of Figure 8, for the case in which the pressure of the fuel fed to the engine is greater than or equal to a predetermined reference pressure.

In the said figures, the reference numeral 55 schematically indicates a closure plug for the line 52 which connects the fuel tank 50 to the outside environment.

The reference numeral 60 indicates a pump for the intake and delivery of the fuel 57, 67 is a fuel level indicator, 65 indicates a feed line for the fuel 57 leaving the pump 60 and fed to an engine 40, in particular for motor vehicles, 66 indicates a filter for the fuel 57, 65A indicates an injector offtake line, 70 indicates the injectors of the engine 40, 42 indicates a pressure regulator, 43 indicates a line used for presenting a fuel reference pressure value to the inlet of the regulator 42, 44A indicates a return line for the fuel 57 into the tank 50 as used in traditional feed systems, and 44 indicates a recirculation line for the fuel 57, according to the invention.

The pressure regulator 42 is composed of a external containing structure 141 and a spring 11, which is contained in a chamber 13 and is operated by the movement of a movable membrane 12, by means of a support 14.

The filter 66 is operationally positioned between an inlet feed line 65 originating from the pump 60, and an outlet line leading to the engine 40. The pressure regulator 42 receives at its inlet the quantity of fuel 57 leaving the pump 60 and provides a reference pressure value for the fuel 57 leaving the filter 66 before being fed to the engine 40.

The regulator 42 enables the fuel 57 to recirculate along the line 44 to the tank 50 when the pressure of the fluid leaving the filter 66 is greater than or equal to the predetermined reference pressure.

In practice, when the fuel delivery pressure is less than the reference pressure, the compression spring 11 of the regulator 42 urges the support 14 upwards to carry with it the membrane 12, so inhibiting passage of the fuel 57 through the recirculation line 44. In contrast, when the delivery pressure reaches or exceeds the reference pressure, the membrane 12 urges the support 14 downwards to compress the spring 11, causing the fuel 57 to flow along the recirculation line 44 to the tank 50.

Hence, the total quantity of fuel 57 leaving the pump 60 is also present at the outlet of the filter 66 when the fuel pressure at said outlet is less than the predetermined reference pressure.

The fact of connecting the filter 66 and pressure regulator 42 in parallel not only enables the two elements to be replaced independently of each other in the case of maintenance, fault or malfunction, but also offers numerous further advantages.

For example, in this case the feed line 65, which on leaving the filter 66 feeds the fuel 57 to the engine 40, can be partly integrated with the pressure regulator 42 so as to compare the delivery pressure and the reference pressure within the line 43.

In the same manner, a further plastic component of the feed system (head, stilling chamber, filter 66) can be partly integrated with the pressure regulator 42.

The dimensioning of the pressure regulator 42 differs substantially from the normal dimensioning methods for traditional regulators, especially in view of the fact that the reference pressure used is the pressure required at the delivery rather than the pressure of the fuel 57 present in the tank 50.

The filter 66 can hence be constructed with smaller dimensions than the known art, as it is traversed only by the fuel quantity fed to the engine 40 and not by the quantity corresponding to the throughput of the pump 60.

Moreover, even though the filter 66 has to be dimensioned for maximum fuel requirement to the engine 40, during vehicle operation it operates very often with an inlet fuel flow lesser than this latter (for example during idling, intermediate running or during so-called release) and hence as the fuel quantity passing through it is limited to that strictly necessary for engine operation, the probability of filter clogging is less than known feed systems.

Finally, given the reduced dimensions of the filter 66 compared with the known art, for equal system performance the useful space within the stilling chamber can be utilized to house other auxiliary devices, such as a level indicator 67 of tubular type (which is more easy to manipulate and allows more accurate calibration than a level indicator of arm type, which can deform or even break during its insertion into the tank 50).

The extremely compact structure of the system results in ease of transport and ease of integration into the vehicle intake unit.

If a slight leakage of fuel 57 should occur due to a fault or wear in the seal regions, this leakage is released only into the tank 50 and not into other parts of the intake system or vehicle engine 40, so excluding any danger to the user.

## Claims

1. A system for feeding fuel (57) to an engine (40), particularly for motor vehicles, of the type comprising a tank (50) from which at least one pump (60) withdraws the fuel (57) to be fed to the engine (40), at least one filter (66) which receives at its inlet, via at least one feed line (65), the fuel (57) leaving said pump (60), and at least one pressure regulator (42), connected to said filter (66) and which, on the basis of a predetermined fuel reference pressure, either returns or does not return the excess fuel quantity to the tank interior via at least one recirculation line (44), said filter (66) and said pressure regulator (42) being separable elements which are integrated within said fuel tank (50) and are mounted on said pump (60), whereby besides feeding fuel (57) directly to the inlet of said filter (66), said pump (60) also feeds fuel (57) to the inlet of said pressure regulator (42), said pressure regulator (42) using as reference pressure the fuel pressure at the filter outlet and required for its feed to the engine (40),
said pressure regulator (42) comprising an outer containing structure (141) and at least one compression spring (11), associated with a support (14) and with a membrane (12), which moves within a chamber (13), in such a manner that fuel (57) either flows or does not flow through the recirculation line (44) depending upon whether said pressure present at the outlet of said filter (66) is respectively greater or equal to, or less than, a predetermined reference pressure,
**characterised in that** said feed line (65), which feeds the fuel (57) leaving said filter (66) to the engine (40), is made of a plastic material and is at least partly integrated with said pressure regulator (42).

## Patentansprüche

1. Ein System zum Zuführen von Treibstoff (57) zu einem Motor (40), insbesondere für Kraftfahrzeuge, des Typs, der umfaßt: einen Tank (50), von welchem mindestens eine Pumpe (60) den Treibstoff (57) abzieht, welcher dem Motor (40) zugeführt werden soll, mindestens ein Filter (66), welcher an seinem Einlaß über mindestens eine Zuführleitung (65) den Treibstoff (57) aufnimmt, welcher die Pumpe (60) verläßt, und mindestens einen Druckregler (42), welcher mit dem Filter (66) verbunden ist und welcher auf der Basis eines vorgegebenen Treibstoffreferenzdrucks die überschüssige Treibstoffmenge über mindestens eine Umlaufleitung (44) entweder an das Tankinnere zurückleitet oder nicht zurückleitet, wobei das Filter (66) und der Druckregler (42) getrennte Elemente sind, welche in den Treibstofftank (50) integriert sind und an der Pumpe (60) montiert sind, wobei, neben dem Zuführen von Treibstoff (57) direkt an den Einlaß des Filters (66) die Pumpe (60) Treibstoff (57) auch dem Einlaß des Druckreglers (42) zuführt, und wobei der Druckregler (42) als Referenzdruck den Treibstoffdruck an dem Filterauslaß verwendet und welcher für sein Zuführen zu dem Motor (40) benötigt wird, wobei der Druckregler (42) eine äußere Aufnahmestruktur (141) umfaßt und mindestens eine Druckfeder (11), welche einem Halter (14) und einer Membran (12) zugeordnet ist, welche sich innerhalb einer Kammer (13) in solch einer Weise bewegt, daß Treibstoff (57) entweder durch die Umlaufleitung (44) fließt oder nicht fließt in Abhängigkeit davon, ob der an dem Auslaß des Filters (66) herrschende Druck jeweils größer oder gleich oder kleiner als ein vorgegebener Referenzdruck ist, **dadurch gekennzeichnet, daß** die Zuführleitung (65), welche den Treibstoff (57), welcher den Filter (66) verläßt, dem Motor (40) zuführt, aus einem Kunststoffmaterial ist und mindestens teilweise in den Druckregler (42) integriert ist.

## Revendications

1. Système d'alimentation en carburant (57) d'un moteur (40), en particulier pour les véhicules à moteur, du type comprenant un réservoir (50) depuis lequel au moins une pompe (60) extrait le carburant (57) destiné à alimenter le moteur (40), au moins un filtre (66) qui reçoit à son entrée, par le biais d'au moins une conduite d'alimentation (65), le carburant (57) quittant ladite pompe (60) et au moins un régulateur de pression (42), raccordé audit filtre (66) et qui, sur la base d'une pression de référence prédéterminée du carburant, renvoie ou ne renvoie pas la quantité de carburant en excès vers l'intérieur du réservoir par le biais d'au moins une conduite de recirculation (44), ledit filtre (66) et ledit régulateur de pression (42) étant des éléments pouvant être séparés qui sont intégrés dans ledit réservoir de carburant (50) et sont montés sur ladite pompe (60), moyennant quoi outre le fait d'alimenter directement en carburant (57) l'entrée dudit filtre (66), ladite pompe (60) alimente également en carburant (57) l'entrée dudit régulateur de pression (42), ledit régulateur de pression (42) utilisant comme pression de référence la pression du carburant à la sortie du filtre et requise pour son alimentation du moteur (40), ledit régulateur de pression (42) comprenant une structure formant conteneur extérieur (141) et au moins un ressort de compression (11), associé à un support (14) et à une membrane (12), qui se déplace dans une chambre (13), d'une telle manière que le carburant (57) s'écoule ou non à travers la conduite de recirculaton (44) selon si ladite pression présente à la sortie dudit filtre (66) est respectivement supérieure ou égale à, ou inférieure à, une pression de référence prédéterminée, **caractérisé en ce que** ladite conduite d'alimentation (65) qui fournit le carburant (57) quittant ledit filtre (66) au moteur (40) est faite d'un matériau plastique et est au moins partiellement intégrée au régulateur de pression (42).
